# EUROPEAN PATENT SPECIFICATION

(11) **EP 4 691 258 B1**
(45) Date of publication and mention of the grant of the patent: **09.12.2026**
(21) Application number: 24779182.5
(22) Date of filing: 06.03.2024
(51) Int. Cl.: A23L 5/00, A23C 11/00, A23C 11/02, A23D 7/00, A23G 1/34, A23G 1/44, A23G 1/48, A23L 7/10, A23L 9/20, A23L 27/21

(54) **OILY FOOD CONTAINING FOOD MATERIAL DERIVED FROM GRAMINOID SEEDS**
ÖLIGES NAHRUNGSMITTEL MIT AUS GRAMINOIDSAMEN GEWONNENEM NAHRUNGSMITTEL
ALIMENT HUILEUX CONTENANT UN PRODUIT ALIMENTAIRE ISSU DE GRAINES DE GRAMINOÏDE

(30) Priority: 29.03.2023 JP 2023052525
(43) Date of publication of application: 11.02.2026
(73) Proprietor: Fuji Oil Company, Limited, Izumisano-shi Osaka 598-8540 (JP)
(72) Inventor: SUGIYAMA, Masahiro, Tsukubamirai-shi, Ibaraki 300-2436 (JP); MIYAZAKI, Chiaki, Tsukubamirai-shi, Ibaraki 300-2436 (JP); MOTOIKE, Hideki, Tsukubamirai-shi, Ibaraki 300-2436 (JP)
(74) Representative: Boult Wade Tennant LLP
(86) International application number: PCT/JP2024/008403
(87) International publication number: WO 2024/203046

(56) References cited:
- WO-A1-2022/162184
- WO-A1-2023/189087
- JP-A- 2003 180 253
- JP-A- 2011 072 290
- JP-A- S5 462 339
- JP-B2- 5 446 695
- JP-B2- 7 203 574
- US-A1- 2022 046 939

## Description

### Technical Field

### Related Application

The present application claims the benefit of priority from the Japanese Patent Application No. 2023-052525 filed with the Japan Patent Office on March 29, 2023.

The present invention relates to an oil-based food product containing a food material derived from seeds of a plant belonging to the Poaceae family.

### Background Art

Milk raw materials such as milk, fresh cream, and skimmed milk powder have a peculiar milky taste and are preferred. Thus, milk raw materials are widely used in dairy products, western confectionery, breads, desserts, and the like, as well as in applications such as flavoring for cooking and adding body and richness.

Meanwhile, under the background of increasing preference for animal-food-free diet, concern about milk allergies, and rising prices of milk raw materials, development of plant raw materials that can substitute for animal milk raw materials has also been conducted.

As for beverages, dairy products, and the like, alternatives produced using pulse crops such as soybeans have been disclosed (Patent Documents 1 and 2).

Apart from people who do not eat dairy products as a dietary preference or because of milk allergy, lactose intolerance patients are restricted from ingesting foods containing dairy products. They cannot completely digest lactose in the body and should often avoid foods produced using dairy products containing lactose.

There are people who intentionally avoid ingesting dairy products and also there exist economic or social demands, thus efforts to substitute milk raw materials with plant raw materials have been increasing.

Patent Document 3 discloses an invention related to a milk-free chocolate using roasted grain flour.

Patent Document 4 discloses a food material having a milky taste enhancing effect, which contains a mixture of amino acids and a carbohydrate and is obtained by heating the mixture. Patent Document 5 discloses a milk-flavor enhancer containing a mixture of amino acids and a saccharide, which is used in a milk-based hard candy. Patent Document 6 discloses a method for improving the milky flavor of oil- or fat-containing foods by adding amino acids together with a carbonyl compound and heating the mixture. Patent Document 7 discloses an oil-and-fat composition for bakery products containing free amino acids and sugars to provide a buttery or rich flavor.

### Citation List

### Patent Document

Patent Document 1: JP 2013-013395 A
Patent Document 2: JP S57-033547 A
Patent Document 3: WO 2020/223623
Patent document 4: JP 5 446695 B2
Patent document 5: JP 2011-072290 A
Patent document 6: JP S54-62339 A
Patent document 7: JP 7 203574 B2

### Summary of Invention

### Technical Problem

The present inventors have studied flavoring agents using pulse crops such as soybeans as described in Patent Documents 1 and 2 in the background art. However, when an oil-based food product or the like is prepared using such a material, it may be difficult to feel body or richness as using the milk raw material. When roasted grain flour is used as in Patent Document 3, it may be difficult to provide body or a milky taste to chocolate as in a case where the milk raw material is used.

Therefore, an object of the present invention is to provide an oil-based food product that provides a favorable milky taste and body when a milk raw material in the oil-based food product such as chocolate is replaced with a plant raw material.

The object is to provide an oil-based food product that provides a favorable flavor such as a milky taste and body, particularly when a food material derived from seeds of a plant of the Poaceae family among plant raw materials is used.

### Solution to Problem

As a result of diligent studies, the inventors have focused on adjusting a proportion of free amino acids contained in nonfat solids of an oil-based food product using a food material derived from seeds of a plant belonging to the Poaceae family. As a result, the inventors have discovered that an oil-based food product having a favorable milky taste and body, similar to an oil-based food product using a milk raw material, can be provided.

### Advantageous Effects of Invention

The present invention can provide an oil-based food product that provides a favorable milky taste and body when a milk raw material in the oil-based food product is replaced with a plant raw material.

The present invention can provide an oil-based food product that provides a favorable flavor such as a milky taste and body, particularly when a food material derived from seeds of a plant belonging to the Poaceae family among plant raw materials is used.

### Description of Embodiments

In the oil-based food product of an aspect of the present invention, a food material derived from seeds of a plant belonging to the Poaceae family can be used. The food material used in the present invention is not particularly limited as long as it is derived from the seed of the plant of the Poaceae family, and examples thereof include rice, sorghum, wheat, barley, rye, oat, corn, foxtail millet, barnyard millet, and common millet. In addition, the plant belonging to the Poaceae family may be a non-glutinous type or a glutinous type. In addition, the seeds of a plant belonging to the Poaceae family may be polished or unpolished. In a more specific embodiment, the food material derived from the seeds of a plant belonging to the Poaceae family is one or more selected from the group consisting of sorghum, barley, wheat, white rice, and brown rice.

In an embodiment of the present invention, the food material derived from the seeds of a plant belonging to the Poaceae family is a ground product of the whole or part of the seeds of a plant belonging to the Poaceae family, regardless of whether it is polished or not, and is not a food product which is produced by separation or extraction of a specific nutrient component such as starch and protein.

In the present invention, the term "oil-based food product product" refers to a food in which an oil and/or fat forms a continuous phase, and examples thereof include a chocolate, a butter cream, and a spread. In the present invention, the term "chocolate" may collectively refer to "pure chocolate", "chocolate", and "quasi-chocolate" as defined by the Japan National Chocolate Industry Fair Trade Council, "chocolate-like foods" composed of an oil and/or fat other than cocoa butter and an edible material other than cocoa solids, and other food products containing an edible material dispersed in an oil and/or fat used as a base, and having, for example, curry flavor or cheese flavor.

Examples of the oil and/or fat that can be used in the oil-based food product products and the chocolates include various animal and plant oils and/or fats such as high erucic rapeseed oil, rapeseed oil (canola oil), soybean oil, sunflower seed oil, cottonseed oil, peanut oil, rice bran oil, corn oil, safflower oil, olive oil, kapok oil, sesame oil, evening primrose oil, palm oil, palm kernel oil, coconut oil, cocoa butter, medium-chain fatty acid triglycerides (MCTs), shea butter, sal fat, cocoa butter alternative, babassu oil, milk fat, beef tallow, lard, fish oil, whale oil, algae oil, oil and/or fat derived from microbial fermentations as well as hydrogenated oil, fractionated oils, and interesterified oils thereof.

As the oil and/or fat used in an embodiment of the present invention, plant oil and/or fat, algal oil, oil and/or fat derived from microbial fermentation, as well as hardened oils, fractionated oils, and interesterified oils thereof are preferably used.

In one aspect, the oil-based food product of an embodiment of the present invention is characterized by a proportion of a specific free amino acid contained in nonfat solids. Appropriately adjusting the proportion of the free amino acid contained in the nonfat solids in the oil-based food product allows the oil-based food product to have a favorable milky taste and body.

As the proportion of the specific free amino acid in the free amino acids, amino acid species to be particularly noted are the proportion of the total of leucine and isoleucine and the proportion of the total of asparagine and aspartic acid.

The proportion of the total of leucine and isoleucine in the free amino acid is 23 mass% or more. The proportion is preferably 24 mass% or more, or 25 mass% or more, and more preferably 26 mass% or more, 27 mass% or more, or 28 mass% or more. An upper limit of the proportion of the total of leucine and isoleucine in the free amino acids is preferably 50 mass% or less, more preferably 45 mass% or less, 40 mass% or less, and further preferably 35 mass% or less.

Adjusting the proportion of the total of leucine and isoleucine in the free amino acids contained in the nonfat solids of the oil-based food product to an appropriate range allows the oil-based food product to have a favorable milky taste and body like chocolate.

The nonfat solids of the oil-based food product refers to the amount of the solids excluding water and oil contained in the oil-based food product.

The proportion of the total of asparagine and aspartic acid in the free amino acids is 10 mass% or less. The proportion is preferably 8 mass% or less, 7 mass% or less, and more preferably 6 mass% or less, 5 mass% or less. A lower limit of the total proportion of asparagine and aspartic acid in the free amino acids is preferably 0.05 mass% or more. The lower limit is more preferably 0.1 mass% or more, 0.5 mass% or more, and further preferably 1 mass% or more.

Adjusting the proportion of the total of asparagine and aspartic acid in the free amino acids contained in the nonfat solids of the oil-based food product to an appropriate range allows the oil-based food product to have a favorable milky taste and body like chocolate. Asparagine and aspartic acid may generally be a flavor component of food, but when they are contained in the oil-based food product of the present invention in an appropriate amount or more, they may result in a strange flavor in the oil-based food product.

An amount of free amino acids contained in the nonfat solids of the oil-based food product of the present invention is 0.9 mg/g or more. The amount is more preferably 0.9 to 10 mg/g, 1 to 9.5 mg/g, further more preferably 1.1 to 9 mg/g, 1.2 to 8.5 mg/g, and most preferably 1.3 to 8 mg/g. When the content of the free amino acid is a predetermined amount, the oil-based food product can have a favorable milky taste and body like chocolate.

The content of free amino acids refers to a quantified value of the component determined by liquid chromatography-mass spectrometry described below, and means an amount of the free amino acids contained in the nonfat solids of the oil-based food product.

The proportion of the free amino acids can be quantified as follows by measurement using liquid chromatography and by using liquid chromatography-mass spectrometry.

Hexane is added and mixed in an amount of 10 times (v/w) the amount of the oil-based food product sample, and the supernatant is removed. After degreasing and drying by repeating this procedure three times, the sample is suspended in water at 0.25 mass% or at a concentration falling within the quantitative range of the amino acid-mixed standard solution described below, and centrifuged (14000 rpm for 5 minutes) to provide a supernatant. The supernatant is passed through a cellulose acetate filter having a pore size of 0.2 µm and subjected to separation by liquid chromatography. For the liquid chromatography, a Discovery HS F5 HPLC column is used, and the column temperature is set at 40°C. As a solvent, solvent A (0.1 vol% formic acid-water) and solvent B (0.1 vol% formic acid-acetonitrile) are used. The gradient conditions are: 5 minutes from A 100% to A 75%/B 25%, 6 minutes from A 75%/B 25% to A 65%/B 35%, 4 minutes from A 65%/B 35% to A 5%/B 95%, 4.5 minutes from A 5%/B 95% to A 95%/B 5%, and 0.5 minutes from A 95%/B 5% to A 100%, and the flow rate is set to 250 µL per minute. The sample is introduced into the mass spectrometer and analyzed in electrospray ionization positive mode. The analysis conditions of each amino acid are shown in Table 1, and quantification can be performed using an amino acid-mixed standard solution of type H as a standard.

**[Table 1]**

| | Precursor ion (m/z) | Product ion (m/z) | Cone voltage (V) | Collision energy (eV) |
|---|---|---|---|---|
| Aspartic acid | 134.0 | 88.10 | 10 | 8 |
| Asparagine | 133.1 | 87.15 | 10 | 9 |
| Serine | 105.9 | 60.10 | 10 | 12 |
| Alanine | 89.9 | 44.10 | 10 | 12 |
| Glycine | 75.9 | 30.15 | 10 | 11 |
| Threonine | 120.1 | 74.15 | 10 | 13 |
| Proline | 116.1 | 70.15 | 10 | 18 |
| Glutamic acid | 147.9 | 84.10 | 10 | 17 |
| Glutamine | 147.1 | 130.1 | 10 | 10 |
| Lysine | 147.1 | 84.10 | 10 | 18 |
| Histidine | 155.9 | 110.10 | 10 | 15 |
| Arginine | 175.1 | 70.10 | 10 | 23 |
| Valine | 118.1 | 72.15 | 10 | 13 |
| Methionine | 149.9 | 56.10 | 10 | 14 |
| Tyrosine | 182.1 | 136.10 | 10 | 15 |
| Isoleucine | 132.1 | 86.20 | 10 | 12 |
| Leucine | 132.1 | 86.05 | 10 | 12 |
| Phenylalanine | 166.1 | 120.10 | 10 | 15 |
| Tryptophan | 205.1 | 188.15 | 10 | 12 |
| Cysteine | 241.0 | 151.95 | 10 | 14 |

The free amino acids in the present invention can be evaluated by adding up the free amino acids contained in cocoa mass, cocoa, and other raw materials used for oil-based food products, in addition to food materials derived from the seeds of a plant belonging to the Poaceae family. When the proportion of free amino acids satisfies a predetermined requirement, an oil-based food product having a favorable milky taste and body can be prepared.

The free amino acids contained in the nonfat solids of the oil-based food product greatly depend on the composition of the free amino acids contained in the food material derived from the seeds of a plant belonging to the Poaceae family.

The free amino acids in the food material derived from seeds of a plant belonging to the Poaceae family used in the present invention can be quantified in the same manner as the free amino acids in the nonfat solids of the oil-based food product described above.

The proportion of the total of leucine and isoleucine in the free amino acids of the food material derived from seeds of a plant belonging to the Poaceae family is preferably 15 mass% or more. The proportion is preferably 18 mass% or more, and more preferably 20 mass% or more. An upper limit of the proportion of the total of leucine and isoleucine in the free amino acids is preferably 45 mass% or less, more preferably 43 mass% or less, and further preferably 40 mass% or less.

In addition, the proportion of the total of asparagine and aspartic acid in the free amino acids of the food material derived from the seeds of a plant belonging to the Poaceae family is preferably 10 mass% or less. The proportion is preferably 8 mass% or less, and more preferably 6 mass% or less. A lower limit of the total proportion of asparagine and aspartic acid in the free amino acids is preferably 0.05 mass% or more. The lower limit is preferably 0.1 mass% or more, and further preferably 0.5 mass% or more.

When the proportion of free amino acids satisfies a predetermined requirement, an oil-based food product more strongly having a favorable milky taste and body can be prepared.

The food material derived from the seeds of a plant belonging to the Poaceae family used in the present invention can be selected from those subjected to various treatments in order to adjust the free amino acids contained in the nonfat solids of the oil-based food product. The treatment method is not particularly limited, but the treatment with an enzyme such as protease is preferable. In particular, using a protease-treated product of the seeds of a plant belonging to the Poaceae family leads to easy adjustment of the free amino acid contained in the nonfat solids of the oil-based food product to an appropriate proportion.

The protease used in the present invention can be appropriately selected from proteases classified into, for example, "acid proteases", "neutral proteases", "alkaline proteases", "metal proteases", "thiol proteases", "serine proteases" and the like, irrespective of whether it is derived from animals, plants, or microorganisms. In addition, the protease can also be appropriately selected from proteases classified into, for example, "endo-type protease", "exo-type protease", and "peptidase", according to another classification. One of these proteases may be used individually, or these may be used in combination. Furthermore, these proteases may be used as a preparation having one or more of enzyme activities of these. The protease may or may not be used in combination with an enzyme other than a protease. Moreover, the preparation may or may not have an enzymatic activity other than that of a protease. In a specific embodiment, the protease is one or more selected from the group consisting of a neutral protease, an acid protease, an alkaline protease, and a peptidase.

More specific examples of the protease used in an embodiment of the present invention include acid proteases derived from microorganisms, such as the genus *Aspergillus,* the genus *Penicillium,* and the genus *Rhizopus;* neutral proteases derived from microorganisms, such as the genus *Aspergillus,* the genus *Streptomyces,* and the genus *Bacillus;* alkaline proteases derived from microorganisms, such as the genus *Aspergillus,* the genus *Streptomyces,* and the genus *Bacillus;* and proteases derived from plants, such as bromelain and papain; and proteases derived from animals, such as trypsin, chymotrypsin, and subtilisin. In addition, these may be used in any combination. In a more specific embodiment, the protease used in the present aspect is a protease derived from the genus *Bacillus,* such as, for example, a protease derived from *Bacillus amyloliquefaciens* or a protease derived from *Bacillus licheniformis.*

Examples of commercially available proteases that can be used in an embodiment of the present aspect include Protease A, Protease M, Protease P, Protease M "Amano" SD, Protease N, Protease NL, Protease S, Umamizyme, Peptidase R, Newlase A, Newlase F, Samoase PC10F, Samoase GL30, Papain W40, Protin SD-NY10, and Protin SD-AY10 (all the above from Amano Enzyme Inc.); Sumizyme AP, Sumizyme LP, Sumizyme MP, Sumizyme FP, and Sumizyme LPL (all the above from SHINNIHON CHEMICALS Corporation); Denapsin 2P, Denazyme AP, XP-415, Bioplase XL-416F, Bioplase SP-4FG, and Bioplase SP-15FG (all the above from Nagase ChemteX Corporation); Molsin F, PD-Enzyme, IP-Enzyme, and AO-Protease (all the above from Kikkoman Corporation); Punchdase YP-SS, Punchdase NP-2, and Punchdase P (all the above from Yakult Pharmaceutical Industry Co., Ltd.); Flavourzyme, Aroase, Protamex, Neutrase, and Alcalase (all the above from Novozymes); and Kokulase SS and Kokulase P Granules (all the above from Mitsubishi Chemical Corporation). One or two or more enzymes may be selected from these and used.

The amount of the protease to be used is not particularly limited and can be freely set by those skilled in the art according to the raw material to be used and the desired flavor. An amount of the protease to be used varies according to the potency and the like, but in an embodiment, the amount of the protein contained in a protease preparation is in the range of from 0.01 to 90 mass% based on the mass of the seeds of a plant belonging to the Poaceae family. In a specific embodiment, the amount is from 0.01 to 10 mass%, for example, from 0.03 to 9 mass%, from 0.05 to 8 mass%, from 0.1 to 7 mass%, or from 0.2 to 6 mass%. In addition, in one embodiment, the amount of the protease or protease preparation used is in the range of from 0.01 to 100% based on the mass of the seeds of a plant belonging to the Poaceae family. In a specific embodiment, the amount of the protease or protease preparation used is from 0.01 to 80 mass%, for example, from 0.25 to 70 mass%, from 0.5 to 50 mass%, from 1 to 40 mass%, from 2 to 30 mass%, or from 3 to 20 mass% with respect to the seeds of a plant belonging to the Poaceae family.

The amount of protein in the protease preparation can be quantified by the combustion method or Kjeldahl method, which are recognized as official methods.

The conditions of the protease treatment are not particularly limited and can be freely set by those skilled in the art according to the type of enzyme to be used and the like. In one embodiment, the treatment temperature is from 20 to 80°C, for example, from 40 to 75°C or from 45 to 70°C, and the treatment time is from 0.5 to 24 hours, for example, from 1 to 16 hours, from 2 to 12 hours, or from 3 to 9 hours.

When the seeds of a plant belonging to the Poaceae family used in the oil-based food product of an embodiment of the present invention is subjected to protease treatment, the moisture content during the enzyme treatment is preferably set to 70 mass% or less. When the moisture content is high, the enzyme reaction may easily proceed. However, after the completion of the enzyme reaction, drying may take a long time, or the application of the product to foods may be limited. The moisture content during the protease treatment of an embodiment of the present invention is preferably 70 mass% or less, more preferably 65 mass% or less, and further preferably 60 mass% or less.

In addition, the moisture content during the protease treatment of an embodiment of the present invention is preferably 5 mass% or more, more preferably 8 mass% or more, and further preferably 10 mass% or more.

The food material derived from the seeds of a plant of the Poaceae family, obtained by the protease treatment may be subjected to drying treatment. Examples of the drying treatment include heat drying, ventilation drying, freeze drying, spray drying, and fluidized bed drying. In one embodiment, the treated product obtained by the protease treatment is dried at a drying temperature of from 35 to 75°C, for example, from 40 to 70°C or from 42 to 65°C for a drying time of from 1 to 50 hours, for example, from 3 to 40 hours, from 5 to 35 hours, or from 8 to 30 hours.

The treated product obtained by the protease treatment may be treated in a specific temperature range before the drying treatment. Examples of the treatment include 50 to 90°C for 0.5 to 5 hours. The treatment may further improve the flavor. In addition, the treatment can deactivate the enzyme. The more preferable range for treatment temperature can be selected from 60 to 85°C or 65 to 80°C. The more preferable range for treatment time can be selected from 0.5 to 4 hours or 0.5 to 3 hours.

The protease-treated seeds of a plant belonging to the Poaceae family serving as a raw material of the protease-treated product may be mixed with non-protease-treated seeds of a plant of the Poaceae family. The type of the non-protease-treated seeds of a plant belonging to the Poaceae family to be mixed may be the same or different. In addition, for each, one or more types of plants belonging to the Poaceae family may be mixed.

The powder obtained by treating the seeds of a plant of the Poaceae family with a protease and drying the treated seeds can be used for an oil-based food product. The dry powder can impart a favorable milky taste and body to the oil-based food product when used in place of milk raw materials such as whole milk powder and skim milk powder in the oil-based food product.

In one embodiment, the content of the food material derived from the seeds of a plant belonging to the Poaceae family in the oil-based food product can be appropriately set by those skilled in the art depending on the amount of free amino acids and the flavor. In a specific embodiment, the content is 35 mass% or less, for example, from 1 to 30 mass% or from 3 to 27 mass%.

In an embodiment of the present invention, the milk solids means the milk raw material excluding water. The milk raw material refers to any dairy product contained in known milk chocolate and the like. Examples of the milk raw material include, but are not limited to, whole milk powder, skimmed milk powder, cream, cream powder, and milk fat.

In one aspect, the milk solids of the oil-based food product of the present invention is preferably 5 mass% or less, more preferably 4 mass% or less, 3 mass% or less, 2 mass% or less, or 1 mass% or less, and most preferably the oil-based food product is substantially free of milk solids. "Substantially free of milk solids" means that the content of milk solids is less than 1 mass%.

The oil-based food products such as chocolates that are substantially free of milk solids can be prepared by appropriately combining cocoa mass and cocoa powder with fats and/or oils such as cocoa butter and plant oils and/or fats, as well as saccharides such as sugar, powdered raw materials derived from plants, emulsifiers, and flavorings.

The inorganic salt in the present invention is not particularly limited as long as it is an inorganic salt acceptable as a food. Examples of a sodium salt include sodium chloride, sodium citrate, sodium succinate, sodium gluconate, and sodium tartrate. Examples of a potassium salt include potassium chloride, potassium phosphate, potassium gluconate, potassium citrate, and potassium malate. Examples of a calcium salt include calcium lactate, calcium phosphate, calcium gluconate, calcium citrate, calcium malate, and calcium chloride. Examples of a magnesium salt include magnesium chloride and magnesium sulfate. Two or more kinds of inorganic salts may be used in combination.

A more preferable type of the inorganic salt is a sodium salt, a potassium salt, and a magnesium salt. Using these inorganic salts in an oil-based food product allows the oil-based food product to have favorable body.

The content of the inorganic salt added is preferably from 0.05 to 5 mass% in the oil-based food product. The content is more preferably from 0.06 to 4 mass% or from 0.07 to 3 mass%, further preferably from 0.08 to 2.8 mass% or from 0.1 to 2.5 mass%, and most preferably from 0.2 to 2.3 mass% or from 0.3 to 2.1 mass%. When the content is in the preferable range, the oil-based food product can have a favorable milky taste.

There is no particular limitation on the operation of adding the inorganic salt, and the inorganic salt can be added during the preparation of the oil-based food product or during the protease treatment.

The oil-based food product according to an embodiment of the present invention may be produced in accordance with a common method for producing chocolates, and the oil-based food product can be prepared, for example, by subjecting a raw material blend containing cocoa raw materials (cocoa mass, cocoa, cocoa butter), the powdered food material derived from the seeds of a plant of the Poaceae family, and the above-described oils and/or fats, and an optional secondary raw material such as sugar, dietary fiber, fruit juice powder, fruit powder, a flavoring agent, an emulsifier, an aroma agent, and a coloring agent, blended in an appropriate proportion, to a grinding step using a roll refiner and a mixing step using a mixer or conche in a conventional manner. The production method is not limited as long as the method includes the grinding step and mixing step, and for example, the oil-based food product can also be prepared by a production method including the grinding step and mixing step using a ball mill in a simultaneous manner.

For the sweetener, any known sweetener can be used, but, for example, one or two or more selected from a saccharide, such as sugar, glucose, fructose, an isomerized sugar, a starch syrup, trehalose, maltitol, and sorbitol; aspartame, stevia, glycyrrhizin, thaumatin; and the like are suitable.

In the present invention, the "body" refers to a robust taste that is felt when a food is consumed, and the "richness" refers to a lasting robust taste that lasts until the food is consumed in the mouth.

In the present invention, the "milky taste" refers to a flavor derived from a milk raw material, and is felt when a chocolate using a milk raw material, such as so-called milk chocolate or white chocolate, is consumed, among oil-based food products.

### Examples

Hereinafter, the present invention will be described in more detail with reference to examples of the present invention. In the examples, % and parts are both meant to be on a mass basis.

### • Study 1

### • Preparation of treated product

White sorghum, one type of food material derived from the seeds of a plant of the Poaceae family, was ground into powder, or powdery white sorghum was used.

To 10 g of the powder, 7.5 g of water and various enzyme preparations shown in Table 2 were added and mixed such that the protein content in the enzyme preparation was 0.05 g (0.5 mass% per white sorghum powder).

Further, according to Table 2, a mixture to which sodium chloride as an inorganic salt was added in an amount of 3.6 mass% per the white sorghum powder and a mixture to which sodium chloride was not added were prepared, respectively, to provide mixtures. The resulting mixture was reacted at 50°C for 8 hours.

After the reaction, the mixture was dried in a dryer at 45°C for 15 hours to provide a treated product shown in Table 2.

For drying, an electric dryer Petit Mini (TAIKI SANGYO CO., LTD.) was used.

### • Measurement of free amino acids in nonfat solids of treated product

The treated products shown in Table 2 were subjected to liquid chromatography, and the content of free amino acids in the nonfat solids was quantified by liquid chromatography-mass spectrometry.

As the liquid chromatography measurement apparatus, ACQUITY UPLC 1-Class (manufactured by Waters Corporation) was used. For mass spectrometry, XEVO TQ-XS (manufactured by Waters Corporation) was used.

As a column for the liquid chromatographic assay, 2.1 mm × 15 cm Discovery HS F5-3 3 µm (manufactured by Merck) was used.

As a standard, an amino acid mixed standard solution type H (manufactured by FUJIFILM Wako Pure Chemical Corporation) was used.

The results are shown in Table 3.

**[Table 2]**

| | Enzyme species | Inorganic salt |
|---|---|---|
| Treated product a (heat only) | Absent | Absent |
| Treated product b (heat and inorganic salt only) | Absent | Sodium chloride 0.36 g (3.6% per flour) |
| Treated product A | Neutral protease¹ | Sodium chloride 0.36 g (3.6% per flour) |
| Treated product c | α-Amylase ² | Sodium chloride 0.36 g (3.6% per flour) |

| | | |
|---|---|---|
| 1: Neutrase 0.8 L (Novozymes A/S), 2: Uniase L (Yakult Pharmaceutical Co., Ltd.) | | |

**[Table 3]**

| | Treated product a | Treated product b | Treated product A | Treated product c |
|---|---|---|---|---|
| Total of leucine and isoleucine [%/total of free amino acids] | 7.0 | 8.9 | 26.9 | 13.4 |
| Total of asparagine and aspartic acid [%/total of free amino acids] | 19.8 | 20.2 | 2.5 | 10.9 |
| Amount of free amino acids [mg/g (total nonfat solids)] | 0.70 | 1.11 | 6.78 | 28.15 |
| Amount of inorganic salt [%/total of treated product] | 0.1 | 3.5 | 3.4 | 3.4 |

### • Preparation of oil-based food product

The treated product obtained above was mixed with cocoa, powdered sugar, melted oil and/or fat, and lecithin in the blends shown in Table 4, and the mixture was finely ground in a ball mill, mixed, and liquefied to provide an oil-based food product.

The oil-based food products were molded with a mold and the flavors were evaluated. For comparison, white sorghum that was not subjected to the enzyme reaction was subjected to heat treatment at 50°C for 8 hours and then drying (treated product a), and white sorghum to which sodium chloride was added was subjected to heat treatment and drying (treated product b) were used as controls.

As for the ball mill, Shake Master Auto, a stainless steel ball mill manufactured by Biomedical Science Co., Ltd. was used for the treatment.

The treatment temperature during the fine grinding in the ball mill is not particularly limited, but was from 40°C to 65°C in actual measurement at which the melted state of the oil and/or fat can be maintained.

As for the cocoa, commercially available alkali-treated cocoa having an oil content of 11% was used.

Parkena S (manufactured by FUJI OIL CO., LTD.) was used as the oil and/or fat.

In addition, as a reference product, an oil-based food product containing cocoa mass, powdered sugar, whole milk powder, cocoa butter, and soy lecithin was prepared in the same manner.

### • Flavor evaluation

The flavor was evaluated by sensory evaluation by three or five trained panelists by consensus according to the following criteria.

### <Milky Taste>

Score 5: Milky taste is felt well. Good milk chocolate-like flavor.
Score 4: Milky taste is felt. Milk chocolate-like flavor.
Score 3: Slightly weak milky taste is felt.
Score 2: Milky taste is weak.
Score 1: No milky taste is felt. No milk chocolate-like flavor.
A score of 3 or higher was determined to be of acceptable quality.

### <Body and Richness>

Score 5: Strong body is felt. Richness is added.
Score 4: Body is felt. Slight richness.
Score 3: Richness is weak, but body is felt.
Score 2: Both body and richness are hardly felt.
Score 1: Neither body nor richness is felt.
A score of 3 or higher was determined to be of acceptable quality.

### • Measurement of free amino acids in nonfat solids of oil-based food product

The oil-based food products prepared in the blends shown in Table 4 were subjected to liquid chromatography, and the content of free amino acids in the nonfat solids was quantified by liquid chromatography-mass spectrometry.

As a liquid chromatography measurement apparatus, ACQUITY UPLC 1-Class (manufactured by Waters Corporation) was used. For mass spectrometry, XEVO TQ-XS (manufactured by Waters Corporation) was used.

As a column for the liquid chromatographic assay, 2.1 mm × 15 cm Discovery HS F5-3 3 µm (manufactured by Merck) was used.

As a standard, an amino acid mixed standard solution type H (manufactured by FUJIFILM Wako Pure Chemical Corporation) was used.

**[Table 4]**

| | Reference Example 1 | Comparative Example 1 | Comparative Example 2 | Example 1 | Comparative Example 3 | Comparative Example 4 |
|---|---|---|---|---|---|---|
| Treated product a [parts] | 0 | 10.0 | 0 | 0 | 0 | 0 |
| Treated product b [parts] | 0 | 0 | 10.0 | 0 | 0 | 0 |
| Treated product A [parts] | 0 | 0 | 0 | 10.0 | 0 | 0 |
| Treated product c [parts] | 0 | 0 | 0 | 0 | 10.0 | 0 |
| Whole milk powder [parts] | 23.0 | 0 | 0 | 0 | 0 | 0 |
| Cocoa [parts] | 0 | 10.0 | 10.0 | 10.0 | 10.0 | 0 |
| Cocoa mass [parts] | 11.3 | 0 | 0 | 0 | 0 | 10.0 |
| Powdered sugar [parts] | 40.3 | 34.5 | 34.5 | 34.5 | 34.5 | 34.5 |
| Starch [parts] | 0 | 0 | 0 | 0 | 0 | 10.0 |
| Cocoa butter [parts] | 25.0 | 0 | 0 | 0 | 0 | 0 |
| Sodium chloride [parts] | 0 | 0 | 0 | 0 | 0 | 0.2 |
| Plant oil and/or fat [parts] | 0 | 45.3 | 45.3 | 45.3 | 45.3 | 45.3 |
| Soy lecithin [parts] | 0.4 | 0.2 | 0.2 | 0.2 | 0.2 | 0.2 |
| Total of leucine and isoleucine [%/total of free amino acids] | 19.6 | 20.7 | 17.5 | 31.9 | 21.4 | 20.0 |
| Total of asparagine and aspartic acid [%/total of free amino acids] | 4.1 | 6.7 | 11.1 | 2.4 | 8.1 | 6.8 |
| Amount of free amino acids [mg/g (total of nonfat solids)] | 1.62 | 1.18 | 1.41 | 3.80 | 4.49 | 1.63 |
| Milk solids [%/total of oil-based food product] | 22.2 | 0 | 0 | 0 | 0 | 0 |
| Amount of inorganic salt [%/total oil-based food product] | 1.70 | 1.01 | 1.35 | 1.34 | 1.34 | 0.30 |
| Milky taste | 5 | 1 | 1 | 4 | 2 | 1 |
| Body | 5 | 1 | 2 | 5 | 2 | 3 |

The oil-based food product of Examples had a proportion of the total of leucine and isoleucine and a proportion of the total of asparagine and aspartic acid in the free amino acids in the nonfat solids within a predetermined range, and had a milky taste and body, and a milk chocolate-like flavor. In particular, the addition of the inorganic salt made it possible to favorably provide the milky taste and body. In addition, the oil-based food product of Examples had a smooth texture without sticking in the mouth. On the other hand, those having a proportion of free amino acids outside the range had an insufficient milky taste and body.

### • Study 2

Using the treated product A, an oil-based food product was prepared according to the blend shown in Table 5 in the same manner as in Study 1.

These oil-based food products were molded, and the free amino acids were quantified and the flavor was evaluated in the same manner as in Study 1.

**[Table 5]**

| | Example 2 | Example 3 | Example 4 | Example 5 |
|---|---|---|---|---|
| Treated product A [parts] | 10.0 | 5.0 | 20.0 | 10.0 |
| Cocoa [parts] | 10.0 | 10.0 | 10.0 | 0 |
| Cocoa mass [parts] | 0 | 0 | 0 | 20.0 |
| Powdered sugar [parts] | 23.7 | 23.7 | 23.7 | 23.7 |
| Starch [parts] | 10.8 | 15.8 | 0.8 | 10.8 |
| Cocoa butter [parts] | 0 | 0 | 0 | 35.3 |
| Plant oil and/or fat [parts] | 45.3 | 45.3 | 45.3 | 0 |
| Soy lecithin [parts] | 0.2 | 0.2 | 0.2 | 0.2 |
| Total of leucine and isoleucine [%/total of free amino acids] | 28.1 | 27.3 | 28.8 | 26.4 |
| Total of asparagine and aspartic acid [%/total of free amino acids] | 3.0 | 3.9 | 2.5 | 3.6 |
| Amount of free amino acids [mg/g (total of nonfat solids)] | 2.67 | 1.88 | 3.91 | 3.28 |
| Milk solids [%/total of oil-based food product] | 0 | 0 | 0 | 0 |
| Amount of inorganic salt [%/total of oil-based food product] | 1.34 | 1.17 | 1.68 | 0.94 |
| Milky taste | 4 | 3 | 4 to 5 | 4 |
| Body | 5 | 3 to 4 | 5 | 5 |

When the blending proportion of the treated product A was changed, a favorable milky taste and body were felt as long as the proportion of free amino acids was within the predetermined range. In addition, there was a smooth texture without sticking in the mouth.

### • Study 3

### • Preparation of treated product

To 10 g of white sorghum powder, 7.5 g of water, 0.36 g of sodium chloride as an inorganic salt, and the same neutral protease as in Study 1 were added and mixed such that the protein content in protease was 0.05 g (0.5 mass% of the white sorghum powder). The mixture was reacted at 50°C for 4 hours. After the reaction, the reaction mixture was placed in an incubator at a set temperature shown in Table 6 for 1 hour, and further dried at 45°C for 15 hours in a dryer to provide a treated product shown in Table 6.

For drying, an electric dryer Petit Mini (TAIKI SANGYO CO., LTD.) was used.

The free amino acids in the nonfat solids of the treated product obtained were quantified. The results are shown in Table 7.

### • Preparation of oil-based food product

Using the treated products B to E, an oil-based food product was prepared according to the blend shown in Table 8 in the same manner as in Study 1.

These oil-based food products were molded, and the free amino acids were quantified and the flavor was evaluated in the same manner as in Study 1.

**[Table 6]**

| | Enzyme species | Heating temperature after reaction |
|---|---|---|
| Treated product B | Neutral protease | 50°C (no temperature change) |
| Treated product C | Neutral protease | 60°C |
| Treated product D | Neutral protease | 70°C |
| Treated product E | Neutral protease | 80°C |

**[Table 7]**

| | Treated product B | Treated product C | Treated product D | Treated product E |
|---|---|---|---|---|
| Total of leucine and isoleucine [%/total of free amino acids] | 25.7 | 26.2 | 26.1 | 25.8 |
| Total of asparagine and aspartic acid [%/total of free amino acids] | 2.9 | 2.7 | 4.3 | 4.7 |
| Amount of free amino acids [mg/g (total of nonfat solids)] | 6.09 | 6.48 | 6.74 | 6.85 |
| Amount of inorganic salt [%/total of treated product] | 3.4 | 3.4 | 3.4 | 3.4 |

**[Table 8]**

| | Example 6 | Example 7 | Example 8 | Example 9 |
|---|---|---|---|---|
| Treated product B [parts] | 10.0 | 0 | 0 | 0 |
| Treated product C [parts] | 0 | 10.0 | 0 | 0 |
| Treated product D [parts] | 0 | 0 | 10.0 | 0 |
| Treated product E [parts] | 0 | 0 | 0 | 10.0 |
| Cocoa [parts] | 10.0 | 10.0 | 10.0 | 10.0 |
| Powdered sugar [parts] | 34.5 | 34.5 | 34.5 | 34.5 |
| Plant oil and/or fat [parts] | 45.3 | 45.3 | 45.3 | 45.3 |
| Soy lecithin [parts] | 0.2 | 0.2 | 0.2 | 0.2 |
| Total of leucine and isoleucine [%/total of free amino acids] | 28.5 | 28.2 | 28.3 | 28.2 |
| Total of asparagine and aspartic acid [%/total of free amino acids] | 1.8 | 1.9 | 1.6 | 1.7 |
| Amount of free amino acids [mg/g (total of nonfat solids)] | 1.87 | 2.01 | 2.10 | 1.91 |
| Milk solids [%/total of oil-based food product] | 0 | 0 | 0 | 0 |
| Amount of inorganic salt [%/total oil-based food product] | 1.34 | 1.34 | 1.34 | 1.34 |
| Milky taste | 4 | 4 | 4 | 4 |
| Body | 5 | 5 | 5 | 5 |

In all of the examples, a favorable milky taste and body were felt. In addition, there was a smooth texture without sticking in the mouth. It was indicated that when the food was treated with protease and then heat-treated for the purpose of enzyme inactivation or the like, a favorable flavor as an oil-based food product was obtained.

### • Study 4

### • Preparation of treated product

In the same manner as in Study 1, 7.5 g of water and neutral protease were used, and the inorganic salt shown in Table 9 was added to and mixed per 10 g of the white sorghum powder. The mixture was reacted at 50°C for 8 hours, and then dried in a dryer at 45°C for 15 hours to provide the treated product shown in Table 9.

The treated product A in Table 9 was of the same quality as the treated product used in Study 1.

### • Preparation of oil-based food product

Using the treated products described in Table 9, oil-based food products containing no milk solids were prepared in the same manner as in Study 1, with the blend shown in Table 10. As shown in Table 10, sodium chloride was added to the oil-based food product using the treated product A and the treated product F when preparing the oil-based food product. These oil-based food products were molded, and the free amino acids were quantified and the flavor was evaluated in the same manner as in Study 1.

**[Table 9]**

| | Enzyme species | Inorganic salt |
|---|---|---|
| Treated product A | Neutral protease | Sodium chloride 0.36 g (3.6% per flour) |
| Treated product F | Neutral protease | Sodium chloride 0.54 g (5.4% per flour) |
| Treated product G | Neutral protease | Potassium chloride 0.36 g (3.6% per flour) |
| Treated product H | Neutral protease | Magnesium chloride 0.36 g (3.6% per flour) |

**[Table 10]**

| | Example 10 | Example 11 | Example 12 | Example 13 |
|---|---|---|---|---|
| Treated product A [parts] | 10.0 | 0 | 0 | 0 |
| Treated product F [parts] | 0 | 10.0 | 0 | 0 |
| Treated product G [parts] | 0 | 0 | 10.0 | 0 |
| Treated product H [parts] | 0 | 0 | 0 | 10.0 |
| Sodium chloride [parts] | 0.4 | 0.4 | 0 | 0 |
| Cocoa [parts] | 10.0 | 10.0 | 10.0 | 10.0 |
| Powdered sugar [parts] | 34.1 | 23.7 | 34.5 | 34.5 |
| Starch [parts] | 0 | 10.4 | 0 | 0 |
| Plant oil and/or fat [parts] | 45.3 | 45.3 | 45.3 | 45.3 |
| Soy lecithin [parts] | 0.2 | 0.2 | 0.2 | 0.2 |
| Total of leucine and isoleucine [%/total of free amino acids] | 31.9 | 30.5 | 32.0 | 27.3 |
| Total of asparagine and aspartic acid [%/total of free amino acids] | 2.4 | 3.2 | 2.4 | 4.4 |
| Amount of free amino acids [mg/g (total of nonfat solids)] | 3.80 | 3.73 | 4.95 | 2.01 |
| Milk solids [%/total of oil-based food product] | 0 | 0 | 0 | 0 |
| Amount of inorganic salt [%/total oil-based food product] | 1.74 | 1.91 | 1.34 | 1.34 |
| Milky taste | 4 | 4 | 4 | 4 to 3 |
| Body | 5 | 4 | 4 | 4 |

The milky taste and body were favorable regardless of the type of inorganic salt used and the time of addition to the oil-based food product.

In addition, in all of the examples, there was a smooth texture without sticking in the mouth.

### • Study 5

Using the treated product A, a white-type oil-based food product was prepared in the same manner as in Study 1, with the blend shown in Table 11, without using cocoa mass or hot chocolate.

These oil-based food products were molded.

The flavor evaluation was determined by consensus by three trained panelists through sensory evaluation according to the following criteria.

### <Milky Taste>

Score 5: Milky taste is felt well. Favorable white chocolate-like flavor.
Score 4: Milky taste is felt. White chocolate-like flavor.
Score 3: Slightly weak milky taste is felt.
Score 2: Milky taste is weak.
Score 1: No milky taste is felt. No white chocolate-like flavor.
A score of 3 or higher was determined to be of acceptable quality.

### <Body and Richness>

Score 5: Strong body is felt. Richness is added.
Score 4: Body is felt. Slight richness.
Score 3: Richness is weak, but body is felt.
Score 2: Both body and richness are hardly felt.
Score 1: Neither body nor richness is felt.
A score of 3 or higher was determined to be of acceptable quality.

**[Table 11]**

| | Example 14 | Comparative Example 5 | Reference Example 2 |
|---|---|---|---|
| Treated product A [parts] | 25.7 | 0 | 0 |
| Treated product a [parts] | 0 | 25.7 | 0 |
| Whole milk powder [parts] | 0 | 0 | 25.7 |
| Powdered sugar [parts] | 38.8 | 38.8 | 38.8 |
| Starch [parts] | 1.0 | 1.0 | 1.0 |
| Plant oil and/or fat [parts] | 34.0 | 34.0 | 34.0 |
| Soy lecithin [parts] | 0.5 | 0.5 | 0.5 |
| Total of leucine and isoleucine [%/total of free amino acids] | 31.4 | 12.3 | 2.4 |
| Total of asparagine and aspartic acid [%/total of free amino acids] | 1.8 | 7.6 | 1.4 |
| Amount of free amino acids [mg/g (total of nonfat solids)] | 2.81 | 0.19 | 0.15 |
| Milk solids [%/total oil-based food product] | 0 | 0 | 24.8 |
| Amount of inorganic salt [%/total oil-based food product] | 0.87 | 0.03 | 1.52 |
| Milky taste | 4 to 5 | 1 | 5 |
| Body | 5 | 1 | 5 |

In the case of a white-type oil-based food product that does not contain cocoa mass or cocoa, the examples were able to provide a favorable milky taste and body.

### Industrial Applicability

According to the present invention, when a food material derived from the seeds of a plant belonging to the Poaceae family is used in an oil-based food product, it is possible to provide an oil-based food product that has a favorable milky taste and body.

## Claims

1. An oil-based food product comprising a food material derived from seeds of a plant of the Poaceae family,
a proportion of a total of leucine and isoleucine in free amino acids included in nonfat solids being 23 mass% or more, and
a proportion of a total of asparagine and aspartic acid in the free amino acids being 10 mass% or less.

2. The oil-based food product according to claim 1, wherein the nonfat solids include 0.9 mg/g or more of free amino acids.

3. The oil-based food product according to claim 1 or 2, wherein a proportion of milk solids is 5 mass% or less.

4. The oil-based food product according to claim 1 or 2, including 0.05 to 5 mass% of an inorganic salt.

5. The oil-based food product according to claim 3, wherein the oil-based food product is chocolate.

6. The oil-based food product according to claim 4, wherein the oil-based food product is chocolate.

7. The oil-based food product according to claim 4, wherein the inorganic salt is one or more inorganic salts selected from a sodium-containing salt, a magnesium-containing salt, and a potassium-containing salt.

8. A method for producing an oil-based food product the method comprising:
blending a food material derived from seeds of a plant of the Poaceae family and oil and/or fat, grinding, and mixing; and
preparing the oil-based food product such that free amino acids in nonfat solids of the oil-based food product satisfy requirements of 1) and 2):
1) a proportion of a total of leucine and isoleucine in the free amino acids is 23 mass% or more; and
2) a proportion of a total of asparagine and aspartic acid in the free amino acids is 10 mass% or less.

9. A method for improving a flavor of an oil-based food product using a food material derived from seeds of a plant of the Poaceae family,
free amino acids in nonfat solids in the oil-based food product satisfying requirements of 1) and 2):
1) a proportion of a total of leucine and isoleucine in the free amino acids is 23 mass% or more; and
2) a proportion of a total of asparagine and aspartic acid in the free amino acids is 10 mass% or less.

## Patentansprüche

1. Ölbasiertes Nahrungsmittelprodukt, umfassend einem aus Samen einer Pflanze der Familie der Süßgräser gewonnenen Nahrungsmittelrohstoff,
wobei ein Anteil einer Gesamtmenge von Leucin und Isoleucin in freien Aminosäuren, die in fettfreien Feststoffen eingeschlossen sind, 23 Masse-% oder mehr beträgt und
ein Anteil einer Gesamtmenge von Asparagin und Asparaginsäure in den freien Aminosäuren 10 Masse-% oder weniger beträgt.

2. Ölbasiertes Nahrungsmittelprodukt nach Anspruch 1, wobei die fettfreien Feststoffe 0,9 mg/g oder mehr von freien Aminosäuren einschließen.

3. Ölbasiertes Nahrungsmittelprodukt nach Anspruch 1 oder 2, wobei ein Anteil von Milchfeststoffen 5 Masse-% oder weniger beträgt.

4. Ölbasiertes Nahrungsmittelprodukt nach Anspruch 1 oder 2, das 0,05 bis 5 Masse-% eines anorganischen Salzes einschließt.

5. Ölbasiertes Nahrungsmittelprodukt nach Anspruch 3, wobei das ölbasierte Nahrungsmittelprodukt Schokolade ist.

6. Ölbasiertes Nahrungsmittelprodukt nach Anspruch 4, wobei das ölbasierte Nahrungsmittelprodukt Schokolade ist.

7. Ölbasiertes Nahrungsmittelprodukt nach Anspruch 4, wobei das anorganische Salz ein oder mehrere anorganische Salze, ausgewählt aus einem natriumhaltigen Salz, einem magnesiumhaltigen Salz und einem kaliumhaltigen Salz, ist.

8. Erzeugungsverfahren für ein ölbasiertes Nahrungsmittelprodukt, wobei das Verfahren umfasst:
Vermengen von einem aus Samen einer Pflanze der Familie der Süßgräser gewonnenen Nahrungsmittelrohstoff und Öl und/oder Fett, Mahlen und Mischen; und
Zubereiten des ölbasierten Nahrungsmittelprodukts so, dass freie Aminosäuren in fettfreien Feststoffen des ölbasierten Nahrungsmittelprodukts die Anforderungen von 1) und 2) erfüllen:
1) ein Anteil einer Gesamtmenge von Leucin und Isoleucin in den freien Aminosäuren beträgt 23 Masse-% oder mehr; und
2) ein Anteil einer Gesamtmenge von Asparagin und Asparaginsäure in den freien Aminosäuren beträgt 10 Masse-% oder weniger.

9. Verfahren zum Verbessern eines Geschmacks eines ölbasierten Nahrungsmittelprodukts unter Verwendung eines aus Samen einer Pflanze der Familie der Süßgräser gewonnenen Nahrungsmittelrohstoffs,
wobei freie Aminosäuren in fettfreien Feststoffen in dem ölbasierten Nahrungsmittelprodukt die Anforderungen von 1) und 2) erfüllen:
1) ein Anteil einer Gesamtmenge von Leucin und Isoleucin in den freien Aminosäuren beträgt 23 Masse-% oder mehr; und
2) ein Anteil einer Gesamtmenge von Asparagin und Asparaginsäure in den freien Aminosäuren beträgt 10 Masse-% oder weniger.

## Revendications

1. Produit alimentaire à base d'huile comprenant une matière alimentaire dérivée de graines d'une plante de la famille des Poacées,
une proportion d'un total de leucine et d'isoleucine dans les acides aminés libres inclus dans les matières sèches non grasses étant égale ou supérieure à 23 % en masse, et
une proportion d'un total d'asparagine et d'acide aspartique dans les acides aminés libres étant de 10 % en masse ou moins.

2. Produit alimentaire à base d'huile selon la revendication 1, dans lequel les matières sèches non grasses incluent 0,9 mg/g ou plus d'acides aminés libres.

3. Produit alimentaire à base d'huile selon la revendication 1 ou 2, dans lequel une proportion de matières sèches du lait est de 5 % en masse ou moins.

4. Produit alimentaire à base d'huile selon la revendication 1 ou 2, incluant de 0,05 à 5 % en masse d'un sel inorganique.

5. Produit alimentaire à base d'huile selon la revendication 3, dans lequel le produit alimentaire à base d'huile est du chocolat.

6. Produit alimentaire à base d'huile selon la revendication 4, dans lequel le produit alimentaire à base d'huile est du chocolat.

7. Produit alimentaire à base d'huile selon la revendication 4, dans lequel le sel inorganique est un ou plusieurs sels inorganiques sélectionnés parmi un sel contenant du sodium, un sel contenant du magnésium et un sel contenant du potassium.

8. Procédé de production d'un produit alimentaire à base d'huile, le procédé comprenant :
le mélange d'une matière alimentaire dérivée de graines d'une plante de la famille des Poacées et d'huile et/ou de matière grasse, le broyage et le mélange ; et
la préparation du produit alimentaire à base d'huile de telle sorte que des acides aminés libres dans des matières sèches non grasses du produit alimentaire à base d'huile satisfont aux exigences de 1) et 2) :
1) une proportion d'un total de leucine et d'isoleucine dans les acides aminés libres est de 23 % en masse ou plus ; et
2) une proportion d'un total d'asparagine et d'acide aspartique dans les acides aminés libres est de 10 % en masse ou moins.

9. Procédé d'amélioration d'une saveur d'un produit alimentaire à base d'huile à l'aide d'une matière alimentaire dérivée de graines d'une plante de la famille des Poacées,
des acides aminés libres dans des matières sèches non grasses dans le produit alimentaire à base d'huile satisfaisant aux exigences de 1) et 2) :
1) une proportion d'un total de leucine et d'isoleucine dans les acides aminés libres est de 23 % en masse ou plus ; et
2) une proportion d'un total d'asparagine et d'acide aspartique dans les acides aminés libres est de 10 % en masse ou moins.
